# EUROPEAN PATENT APPLICATION

(11) **EP 4 474 049 A1**
(43) Date of publication of application: **11.12.2024**
(21) Application number: 23901039.0
(22) Date of filing: 04.12.2023
(51) Int. Cl.: B01J 23/75, B01J 23/22, B01J 21/04, B01J 35/60, B01J 37/02, B01J 37/08, C01B 32/162

(54) **SUPPORTED CATALYST FOR PRODUCING ENTANGLED CARBON NANOTUBES AND METHOD FOR PRODUCING ENTANGLED CARBON NANOTUBES USING SAME**

(30) Priority: 05.12.2022 KR 20220167655
(71) Applicant: LG Chem, Ltd., Yeongdeungpo-gu Seoul 07336 (KR)
(72) Inventor: KIM, Dong Eun, Daejeon 34122 (KR); CHOI, Jung Ho, Daejeon 34122 (KR); HWANG, Doo Sung, Daejeon 34122 (KR); NA, You Wan, Daejeon 34122 (KR); KIM, Se Hyun, Daejeon 34122 (KR)
(74) Representative: Goddar, Heinz J.
(86) International application number: PCT/KR2023/019826
(87) International publication number: WO 2024/123020

(57) **Abstract**

The present invention relates to a catalyst for manufacturing entangled type carbon nanotubes, which makes it possible to manufacture entangled type carbon nanotubes at a high rate, and a manufacturing method for entangled type carbon nanotubes, which makes it possible to manufacture entangled type carbon nanotubes using the catalyst.

## Description

### TECHNICAL FIELD

### Cross-reference to Related Applications

This application claims the benefit of Korean Patent Application No. 10-2022-0167655, filed on December 05, 2022, in the Korean Intellectual Property Office, the disclosure of which is incorporated in the present specification in its entirety by reference.

### Technical Field

The present invention relates to a carried catalyst for manufacturing entangled type carbon nanotubes and a manufacturing method for entangled type carbon nanotubes using the same, which makes it possible to manufacture entangled type carbon nanotubes with high purity.

### BACKGROUND ART

Carbon nanomaterials include fullerene, carbon nanotube (CNT), graphene, graphite nanoplate, and the like, according to the shape of the material. Among them, the carbon nanotube is a macromolecule that is obtained by rolling a hexagonal honeycomb-shaped graphite sheet, in which one carbon atom is bonded to three other carbon atoms, into a nano-sized diameter.

The carbon nanotubes are hollow and thus lightweight, the electrical conductivity thereof is as good as copper, the thermal conductivity thereof as good as diamond, and the tensile strength thereof is comparable to steel. According to the form obtained by rolling, the carbon nanotubes may be classified into a single-walled carbon nanotube (SWCNT), a multi-walled carbon nanotube (MWCNT), and a rope carbon nanotube.

Due to having high electrical characteristics, the single-walled or double-walled carbon nanotube is widely used in element applications such as an electron emitting element, an electronic element, and a sensor. The multi-walled carbon nanotube has inferior electrical properties as compared with the single-walled or double-walled nanotube; however, it has high physical properties and thus can be applied to high-strength composite materials, and the like.

The carbon nanotube can carry catalyst particles in a highly dispersed state and thus is used as a support for a catalyst. However, in a case where the structural strength of the carbon nanotube is weak during the process of carrying the catalyst particles, the structure before and after the carrying may change or the carbon nanotube may be unrolled. This may cause fine particles in a case of an application to a catalytic reaction, and particularly in a case of an application to a fluidized bed reactor, may cause a problem such as poor fluidity due to structural deformation.

As a result, entangled type carbon nanotubes having a high mechanical strength are required in order for carbon nanotubes to be usefully utilized as a support.

The shape of the carbon nanotube is determined according to the secondary structure of an alumina support used in the carried catalyst that is used for manufacturing the carbon nanotube, and it is known that, for example, bundle type carbon nanotubes grow on a plate-shaped alumina support, and entangled type carbon nanotubes grow on a spherical alumina support.

However, bundle type carbon nanotubes may grow even on a carried catalyst for manufacturing carbon nanotubes, where an alumina support having a perfectly spherical shape has been used for the carried catalyst, and thus it is necessary to develop a new method to manufacture fully entangled type carbon nanotubes.

### Citation List

### Documents of Related Art

Patent Document 1: Korean Patent Laid-open Gazette No. 10-2020-0012789

### DISCLOSURE OF THE INVENTION

### TECHNICAL PROBLEM

An object of the present invention is to provide a carried catalyst for manufacturing entangled type carbon nanotubes, which makes it possible to manufacture entangled type carbon nanotubes having a high mechanical rigidity at a high rate.

Another object of the present invention is to provide a manufacturing method for manufacturing entangled type carbon nanotubes by using the carried catalyst for manufacturing entangled type carbon nanotubes.

### TECHNICAL SOLUTION

In order to achieve the above objects, the present invention provides a carried catalyst for manufacturing entangled type carbon nanotubes and a manufacturing method for entangled type carbon nanotubes.
[1] According to an aspect of the present invention, there is provided a carried catalyst for manufacturing entangled type carbon nanotubes, the carried catalyst including:
   a spherical gamma alumina support; and
   Co and V which are carried on the gamma alumina support,
   wherein the above-described gamma alumina support has a pore volume of 0.7 to 1.1 cm³/g and a specific surface area of 80 to 200 m²/g, and
   a content of Co carried on the gamma alumina support is 12% by weight to 25% by weight.
[2] The present invention provides the carried catalyst for manufacturing entangled type carbon nanotubes according to [1], wherein Co and V described above are carried in internal pores of the gamma alumina support.
[3] The present invention provides the carried catalyst for manufacturing entangled type carbon nanotubes according to [1] or [2], wherein the gamma alumina support is a secondary particle formed by aggregating primary particles.
[4] The present invention provides the carried catalyst for manufacturing entangled type carbon nanotubes according to any one of [1] to [3], wherein the pore volume of the gamma alumina support is 0.9 to 1.1 cm³/g.
[5] The present invention provides the carried catalyst for manufacturing entangled type carbon nanotubes according to any one of [1] to [4], wherein the specific surface area of the gamma alumina support is 80 to 170 m²/g.
[6] The present invention provides the carried catalyst for manufacturing entangled type carbon nanotubes according to any one of [1] to [5], wherein a sphericity of the gamma alumina support is 0.90 to 1.
[7] The present invention provides the carried catalyst for manufacturing entangled type carbon nanotubes according to any one of [1] to [6], wherein the content of Co carried on the gamma alumina support is 13 to 21% by weight.
[8] The present invention provides the carried catalyst for manufacturing entangled type carbon nanotubes according to any one of [1] to [7], wherein a content of the V carried on the gamma alumina support is 1% by weight to 10% by weight.
[9] According to another aspect of the present invention, there is provided a manufacturing method for entangled type carbon nanotubes, including:
   a step of charging the carried catalyst for manufacturing entangled type carbon nanotubes according to any one of [1] to [8] into the reactor; and
   a step of injecting a carbon source gas into the reactor and carrying out heating to synthesize carbon nanotubes,
   wherein the carbon nanotubes include entangled type carbon nanotubes.
[10] The present invention provides the manufacturing method for entangled type carbon nanotubes, according to [9], wherein the reactor is a fluidized bed reactor.
[11] The present invention provides the manufacturing method for entangled type carbon nanotubes, according to [9] or [10], wherein the carbon nanotubes include 99.8% by weight or more of the entangled type carbon nanotubes.
[12] The present invention provides the manufacturing method for entangled type carbon nanotubes, according to any one of [9] to [11], wherein the entangled type carbon nanotubes have a pore retention rate of 0.98 to 1.02 after being crushed by being subjected to a ball milling process. Here, the ball milling process is carried out using zirconia balls having a ball diameter of 3 mm under conditions of a ball weight of 1 kg, a rotational speed of 230 rpm, a ball milling time of 5 minutes, and a CNT charging amount of 60 g, and a pore retention rate is represented by the following expression.

Pore retention rate = (pore volume of carbon nanotube after ball milling process/pore volume of carbon nanotube before ball milling process) X 100

### ADVANTAGEOUS EFFECTS

In the carried catalyst for manufacturing entangled type carbon nanotubes according to the present invention, an appropriate amount of cobalt is carried on a gamma alumina support having a sufficient pore volume, and thus entangled type carbon nanotubes can be manufactured with high purity. In addition, the manufacturing method for entangled type carbon nanotubes using the same according to the present invention makes it possible to effectively manufacture entangled type carbon nanotubes that can be usefully used as a support.

### BRIEF DESCRIPTION OF THE DRAWINGS

FIG. 1 is a scanning electron microscope (SEM) image of a spherical gamma alumina support used in the manufacturing of a carried catalyst of Example 1.
FIG. 2 is a scanning electron microscope (SEM) image of carbon nanotubes synthesized in Example 1a using the carried catalyst of Example 1.
FIG. 3 is a scanning electron microscope (SEM) image of carbon nanotubes synthesized in Comparative Example 3a using a carried catalyst of Comparative Example 3.
FIG. 4 is a scanning electron microscope (SEM) image of carbon nanotubes synthesized in Comparative Example 4a using a carried catalyst of Comparative Example 4.
FIG. 5 is a scanning electron microscope (SEM) image of carbon nanotubes synthesized in Comparative Example 5a using a carried catalyst of Comparative Example 5.
FIG. 6 is a scanning electron microscope (SEM) image of carbon nanotubes synthesized in Comparative Example 7a using a carried catalyst of Comparative Example 7.

### MODE FOR CARRYING OUT THE INVENTION

Hereinafter, the present invention will be described in more detail.

The terms and words, which are used in the present specification and claims, are not to be restrictively construed in their ordinary or dictionary sense and are to be construed in the sense and with the concepts consistent with the technical ideas of the present invention based on the principle that an inventor may properly define concepts of terms to describe the present invention of the inventor in the best way.

The term "carbon nanotube" that is used in the present invention refers to a secondary structure formed by gathering monomeric units of carbon nanotubes to constitute a bundle type in whole or in part, where the graphite sheet of the monomeric units of the carbon nanotubes has a cylinder form having a nano-sized diameter and has an sp2 bonding structure. In this case, characteristics of a conductor or semiconductor can be exhibited depending on the angle and structure by which the graphite sheet is rolled. According to the number of bonds that constitute the walls of the monomeric units of carbon nanotubes, the carbon nanotubes can be classified into a single-walled carbon nanotube (SWCNT), a double-walled carbon nanotube, and a multi-walled carbon nanotube (MWCNT), where the thinner the wall thickness is, the lower the resistance is.

The carbon nanotube according to the present invention can include any one or more among the carbon nanotube monomeric units which are single-walled, double-walled, and multi-walled.

The term "entangled type" or "non-bundle type" that is used in the present invention refers to a form in which monomeric units of carbon nanotubes are entangled without a regular shape, such as a form of a bundle or rope.

Unless otherwise noted, the term "bundle type" that is used in the present invention refers to a secondary shape of a form of a bundle or rope, in which regarding a plurality of monomeric units of carbon nanotubes, axes in the length direction of the monomeric units are arranged side-by-side in the substantially same orientation or twisted or entangled after being arranged.

### Catalyst for manufacturing entangled type carbon nanotubes

A catalyst that is used in the synthesis of carbon nanotubes using a chemical vapor deposition method can be manufactured in a solid particle form by a variety of methods; however, in general, it is manufactured by a carrying method, which is a method of carrying a metal component in a support. In particular, the catalyst manufacturing method using the carrying method is most widely used in the industrial field since a large amount of catalyst can be manufactured in a short time as compared with a catalyst manufacturing method using physical or chemical deposition, and the activity of the catalyst itself is also outstanding while the cost of catalyst manufacturing is also low. Furthermore, in recent years, a method of carrying a co-catalyst component for improving the activity of the catalyst component, together with a main catalyst component, while manufacturing a catalyst using the carrying method, is preferred.

The carried catalyst for manufacturing entangled type carbon nanotubes according to the present invention includes a spherical gamma alumina support and Co and V which are carried on the gamma alumina support, wherein the above-described support has a pore volume of 0.7 to 1.1 cm³/g and a specific surface area of 80 to 200 m²/g, and a content of Co carried on the gamma alumina support is 12 to 25% by weight, and the carried catalyst for manufacturing entangled type carbon nanotubes according to the present invention may be such that the above-described Co and V are carried in internal pores of the spherical gamma alumina support.

The carried catalyst for manufacturing entangled type carbon nanotubes according to the present invention includes the gamma alumina support as a support and the gamma alumina support is characterized by having a pore volume of at least 0.8 cm³/g, having a specific surface area of 80 to 200 m²/g, and having a spherical shape.

The gamma alumina support, which is a spherical particle, may be porous and may be a secondary particle that is formed by aggregating primary particles. In the gamma alumina support, which is a spherical particle, most of the catalyst component is carried in the internal pores of the gamma alumina, which is a spherical particle, and thus the gamma alumina support allows carbon nanotubes to grow from the catalyst carried in the internal pores, thereby making it possible to manufacture carried catalyst for manufacturing entangled type carbon nanotubes with high purity, and due to having excellent mechanical strength, it can suppress a phenomenon such as the collapse of catalyst particles during the manufacturing process of carbon nanotubes.

In a case where the gamma alumina support has a spherical particle form, a carried catalyst for manufacturing carbon nanotubes, which includes the gamma alumina support, can more smoothly promote a generation reaction for entangled type carbon nanotubes. On the other hand, in a case where the gamma alumina support does not have a spherical particle form, for example, in a case where it has a flat-shaped particle form, a carried catalyst including the above-described support can promote a generation reaction for bundle type carbon nanotubes, and as a result, the carried catalyst may not be suitable for manufacturing entangled type carbon nanotubes.

In the gamma alumina support, which is a spherical particle, the pore volume may be 0.7 to 1.1 cm³/g. Specifically, the pore volume may be 0.7 cm³/g or more, 0.8 cm³/g or more, or 0.9 cm³/g or more, and it may be 1.1 cm³/g or less, 1.0 cm³/g or less, or 0.9 cm³/g or less. In a case of having a pore volume in the above-described range, the gamma alumina support, which is a spherical particle, provides pores having a sufficient volume, whereby Co and V, which are contained in the carried catalyst for manufacturing entangled type carbon nanotubes can be sufficiently carried in the pores. Therefore, it is possible to reduce the co-location of Co and V with a coating layer on the outer surface of the gamma alumina support, and as a result, it is possible to prevent the bundle type carbon nanotubes from growing from the outer surface of the gamma alumina support. In contrast, in a case where the gamma alumina support, which is a spherical particle, has a pore volume smaller than the volume in the above-described range, Co and V can be co-located with a coating layer on a surface other than the pores of the carried catalyst, from which bundle type carbon nanotubes can grow. Alternatively, in a case where the gamma alumina support has a pore volume that is excessive as compared with the volume in the above-described range, the overall pore size also increases. As a result, the gamma alumina support has a solidified form through a subsequent firing process since the specific surface area of the above-described support is reduced to a certain extent, and Co and V are co-located with a coating layer on a surface other than the pores of the carried catalyst, while being aggregated together in the three-dimensional space of the pores having an increased size. This may be a factor that makes it difficult for the manufactured carried catalyst to flow smoothly in the reactor.

In the gamma alumina support, which is a spherical particle, the specific surface area may be 80 to 200 m²/g, and more specifically, the specific surface area may be 80 m²/g or more and 100 m²/g or more, or 120 m²/g or more and 140 m²/g or more. In addition, it may be 170 m²/g or less, 160 m²/g or less, or 150 m²/g or less. In a case where the specific surface area of the support is within the range described above, there is an advantage in that the activity of the catalyst can be increased while maintaining the durability thereof at an outstanding level. On the other hand, the specific surface area may be measured by the BET method, and more specifically, it may be calculated from the amount of nitrogen gas adsorption at liquid nitrogen temperature (77 K) by using BELSORP-mini II manufactured by BEL Japan Inc.

In the gamma alumina support, which is a spherical particle, the sphericity may be 0.90 to 1, and specifically, the sphericity may be more than 0.90, more than 0.92, or more than 0.94. In addition, it may be 1 or less. In a case where the gamma alumina support, which is a spherical particle, satisfies the sphericity in the above-described range, the catalyst for manufacturing entangled type carbon nanotubes satisfies a sufficient sphericity. Therefore, in a case where a carried catalyst including a spherical gamma alumina support that satisfies the above sphericity is used, the growth of the bundle type carbon nanotubes is limited, whereby carried catalyst for manufacturing entangled type carbon nanotubes can be manufactured with high purity.

The sphericity can be measured through image analysis. For example, it can be obtained by acquiring an SEM photographic image of the gamma alumina support, which is a spherical particle, acquiring the contour of the particle in two dimensions, and then carrying out a calculation according to the expression: sphericity = (perimeter)²_{/}(4π x area).

In the gamma alumina support, D₅₀ may be 10 to 70 µm, and D₉₀ may be 20 to 90 um. Specifically, D₅₀ may be 20 to 60 µm, and D₉₀ may be 30 to 80 um. In addition, in the above-described support, the bulk density may be 300 to 1,200 kg/m³, and specifically, the bulk density may be 500 to 1,000 kg/m³. In a case where the physical properties of the gamma alumina support satisfy the range described, the durability of the catalyst including the above-described support can be excellent, while the size and physical properties of carbon nanotubes manufactured from the above-described catalyst can be excellent. On the other hand, D₅₀ and D₉₀ can be measured using a laser diffraction particle size analyzer (S3500, manufactured by MicrotracBEL Corp.), and the bulk density can obtained by filling a 5 ml cylinder with a support to be measured, reading the scale to measure the volume, and then carrying out a calculation by dividing the weight, which is determined by placing the cylinder filled with the support on a weighing instrument, by the previously measured volume.

The above-described Co may be a main catalyst component that plays a substantially catalytic role, and the above-described V may be a co-catalyst component that can enhance the catalytic activity of the main catalyst component.

In addition to Co, the main catalyst component may selectively include Ni, Fe, or all of them, together. The above-described Co and main catalyst component which may be selectively included play a role in lowering the activation energy of the reaction in which the carbon source gas is decomposed to form carbon nanotubes so that the reaction can proceed smoothly, and the main catalyst components listed above have the advantage in that catalytic activity is high while durability is also outstanding.

The content of Co carried on the gamma alumina support may be 12 to 25% by weight. Specifically, the content of Co may be 12% by weight or more, 13% by weight or more, 14% by weight or more, 15% by weight or more, or 16% by weight or more. In addition, it may be 25% by weight or less, 24% by weight or less, 23% by weight or less, 22% by weight or less, 21% by weight or less, 20% by weight or less, 19% by weight or less, 18% by weight or less, 17% by weight or less, or 16% by weight or less. In addition, the content of Co may be, for example, 13% to 21% by weight. In a case where the above-described main catalyst component which may be selectively included is included together in addition to Co, the total content of the main catalyst components including Co may also satisfy the above-described range.

The content of the above-described Co or the total content of Co and the main catalyst component may be calculated by dividing the mass of the main catalyst component in the main catalyst precursor charged during the manufacturing process, by the mass of the catalyst finally obtained, or, separately, it can be calculated by measuring the content of Co or the contents of Co and the main catalyst component in the catalyst particles by the ICP-OES analysis.

In a case where the content of Co carried on the gamma alumina support satisfies the above-described range, Co, which is the main catalyst component, is sufficiently carried in the internal pores of the gamma alumina support, and thus entangled type carbon nanotubes can be manufactured with high purity and high efficiency in a case where carbon nanotubes are manufactured. On the other hand, in a case where the content of Co carried on the gamma alumina support is smaller than the content in the above-described range, carbon nanotubes may not grow sufficiently in a case where the carbon nanotubes are manufactured using the above-described carried catalyst. Therefore, the bulk density may be low, and the pore volume, the average pore size, and the specific surface area may be insufficient overall in the carbon nanotubes that are finally manufactured. In addition, in a case where the content of Co carried on the gamma alumina support is larger than the content in the above-described range, a large quantity of Co may be located on the outer surface of the gamma alumina in addition to the internal pores of the gamma alumina support, and as a result, bundle type carbon nanotubes may grow in a case where carbon nanotubes are manufactured using the above-described carried catalyst, which may cause a problem in that the carbon nanotubes that are finally manufactured include a large quantity of bundle type carbon nanotubes.

In addition to the above-described V, Mo may be selectively included as a co-catalyst component. The co-catalyst component plays a role in increasing the degree of dispersion of the main catalyst component to further increase the activity of the catalyst, and the above-described co-catalyst components have the advantages of having a high synergistic effect with the main catalyst components described above and being easy to be carried on a support.

The content of the V carried on the gamma alumina support may be 1 to 10% by weight, and specifically, may be 1% by weight or more, or 2% by weight or more. In addition, it may be 10% by weight or less, 9% by weight or less, or 8% by weight or less. In a case where the above-described co-catalyst component which may be selectively included is included together in addition to the above-described V, the total content of the co-catalyst components including V may also satisfy the above-described range.

The molar ratio between the main catalyst component and the co-catalyst component, which are carried in the carried catalyst for manufacturing entangled type carbon nanotubes may be 10:0.1 to 10:10, and preferably 10:0.5 to 10:5. In a case where the molar ratio between the main catalyst component and the co-catalyst component satisfies the conditions described above, it is possible to maximize the synergistic effect between the two components, and specifically, it is possible to maximize the activity of the catalyst while minimizing the aggregation of the active component in the support.

Manufacturing method for catalyst for manufacturing entangled type carbon nanotubes

The above-described Co and V, and the main catalyst component or co-catalyst component, which may be selectively included, may be prepared in a form of a catalyst carrying solution including the same and may be carried on the gamma alumina support.

The main catalyst component, including Co, may be included in a form of a precursor in the catalyst carrying solution. Specifically, the main catalyst precursor may include a halide, a nitride, an oxide, a nitroxide, a sulfoxide, a sulfide, a hydroxide, or a metal salt of the main catalyst component, or the like. More specifically, in a case of Co, it is possible to use Co(NO₃)₂·6H₂O, Co₂(CO)₈, [Co₂(CO)₆(t-BuC=CH)], Co(OAc)₂, or CoCl₂·6H₂O, in a case of Fe, it is possible to use Fe(NO₃)₂·6H₂O, Fe(NO₃)₂·9H₂O, Fe(NO₃)₃, Fe(OAc)₂, FeSO₄·7H₂O, or FeCl₂·4H₂O, and in a case of Ni, it is possible to use Ni(NO₃)₂·6H₂O, NiCl₂·2H₂O, Ni(CO)₄, or Ni(OAc)₂·4H₂O. In a case where the main catalyst precursors listed above are used, there is an advantage in that it is possible to manufacture a catalyst having high activity while minimizing the loss of the main catalyst component during the subsequent drying and firing processes.

The co-catalyst components, including the above-described V, may also be included in the catalyst carrying solution in a precursor form. Specifically, the co-catalyst precursor may include a halide, a nitride, an oxide, a nitroxide, a sulfoxide, a sulfide, a hydroxide, or a metal salt of the co-catalyst component, or the like. More specifically, in a case of V, it is possible to use NH₄VO₃, NaVO₃, V(CO)₆, V₂SO₄·7H₂O, V₂O₃, or V₂O₅, and in a case of Mo, it is possible to use (NH₄)₆Mo₇O₂₄·4H₂O, Mo(CO)₆, (NH₄)MoS₄, or MoO₃. The precursors listed above have the advantage of being available relatively easily and easily converted to an oxide form.

A solvent of the catalyst carrying solution may be any solvent that is capable of dissolving the main catalyst precursor and the co-catalyst precursor and can be easily removed in the subsequent drying process. For example, water, an alcoholic solvent such as ethanol, methanol, or butanol, an aromatic hydrocarbon solvent such as toluene or xylene, or the like can be used, and the solvent thereof is not limited thereto.

The molar ratio between the main catalyst component and the co-catalyst component in the catalyst carrying solution may be 10:0.1 to 10:10, and preferably 10:0.5 to 10:5. In a case where the molar ratio between the main catalyst component and the co-catalyst component satisfies the conditions described above, it is possible to maximize the synergistic effect between the two components, and specifically, it is possible to maximize the activity of the catalyst while minimizing the aggregation of the active component in the support.

The concentration of the main catalyst component in the catalyst carrying solution may be 2% to 15% by weight and preferably 3% to 10% by weight, and the concentration of the co-catalyst component may be 0.1% to 1.5% by weight and preferably 0.3% to 1.0% by weight. In a case where the concentration of each component in the catalyst carrying solution is within the range described above, the main catalyst and co-catalyst components can be more easily carried.

The catalyst carrying solution may further contain an organic acid in addition to the main catalyst precursor and the co-catalyst precursor. The organic acid may be, for example, a multicarboxylic acid, which is a compound containing one or more carboxyl groups. It is highly soluble, inhibits precipitation, facilitates the synthesis of the catalyst, as a complexing agent, and increases the synthesis of the carbon nanotubes as an activator. The multicarboxylic acid may be one or more selected from dicarboxylic acid, tricarboxylic acid, and tetracarboxylic acid, and, for example, citric acid, oxalic acid, malonic acid, succinic acid, or tartaric acid may be used. The organic acid can be contained in amount of 0.1% to 1.5% by weight based on the total weight of the catalyst carrying solution. Within this range, the metal components of the main catalyst and the co-catalyst do not precipitate in the catalyst solution, and cracking in the subsequent firing process can also be suppressed.

In addition, mixing can be properly carried out within a range of about 5:1 to 30:1 in terms of the molar ratio of the sum of the main catalyst precursor and the co-catalyst precursor to the organic acid. If such a molar ratio is satisfied, the bulk density of the carbon nanotubes that are synthesized from the manufactured carried catalyst may further increase.

In order to carry the main catalyst component and the co-catalyst component in the catalyst carrying solution, on the support, a step of mixing the catalyst carrying solution and the support is preceded.

In this step, the support and catalyst carrying solution may be mixed so that the content of the main catalyst component to the total weight of the catalyst is 1% to 30% by weight, preferably 3% to 20% by weight, and more preferably 5% to 15% by weight. The catalytic activity can be maximized in a case where the content of the main catalyst component is within the range described above.

In order to efficiently convert, to oxide forms, the main catalyst precursor and the co-catalyst precursor in the mixed catalyst carrying solution, a drying step is required to preferentially remove a solvent from the mixture before the firing step.

The drying in this step may be carried out in the equipment that is conventionally used for drying and may be carried out under the conditions of normal pressure or reduced pressure. In a case of being carried out at normal pressure, the drying may be carried out using equipment such as an oven, and in a case of being carried out at reduced pressure, the drying may be carried out using equipment such as a dryer equipped with depressurization equipment. In a case where the drying is carried out under the conditions of reduced pressure, the pressure may be 10 to 100 mbar, and preferably 50 to 100 mbar. In a case where the drying is carried out by carrying out depressurization to reach a pressure within the pressure range described above, there is an advantage in that a larger amount of solvent can be removed.

The temperature at which the drying is carried out may be 50°C to 200°C, and it may be, in particular, 100°C to 150°C in a case of drying at normal pressure, and may be 50°C to 100°C in a case of drying at reduced pressure. Since drying is easier under the conditions of reduced pressure, the temperature for drying at reduced pressure may be low as compared with drying at normal pressure. Within the temperature conditions described above, the solvent of the catalyst carrying solution can be removed more smoothly. In a case where the temperature is too low, the solvent cannot be removed sufficiently. If the temperature is too high, the solvent is removed sufficiently. However, this may be accompanied by a problem in that the catalyst component or the support is lost.

The final catalyst can be obtained by sufficiently removing the solvent through the preceding drying step and then firing the dried mixture. During the firing process, the precursor components of the main catalyst and the co-catalyst on and inside the support surface are converted to oxides, which can resultantly have catalytic activity.

The firing may be carried out at a temperature of 600 °C to 800 °C, and preferably 650 °C to 750 °C. In addition, the firing may be carried out for 0.5 to 3 hours, and preferably 1 to 2 hours. In a case where the firing temperature in this step is too low or the firing time is too short, the catalyst precursor cannot be sufficiently converted to the oxide form, and in a case where the firing temperature is too high or the firing time is too long, the structural collapse of the support or the dislodging of the carried co-catalyst component and main catalyst component may occur.

### Manufacturing method for entangled type carbon nanotubes

The present invention provides a method of manufacturing entangled type carbon nanotubes by using the above-described carried catalyst for manufacturing entangled type carbon nanotubes. Specifically, the present invention provides a manufacturing method for entangled type carbon nanotubes, including a step of charging the carried catalyst for manufacturing entangled type carbon nanotubes into the reactor and a step of injecting a carbon source gas into the reactor and carrying out heating to synthesize carbon nanotubes, where the carbon nanotubes include entangled type carbon nanotubes.

In the manufacturing method for a carried catalyst for manufacturing entangled type carbon nanotubes, the carried catalyst for manufacturing entangled type carbon nanotubes can be manufactured by the same method as previously described in the manufacturing method for a carried catalyst for manufacturing entangled type carbon nanotubes.

In the manufacturing method for entangled type carbon nanotubes according to the present invention, the above-described step of charging the carried catalyst for manufacturing entangled type carbon nanotubes into the reactor is carried out. The reactor may be a chemical vapor deposition reactor, generally applicable without special design restrictions as long as it is used for the synthesis of carbon nanotubes. More specifically, the reactor may be a fluidized bed reactor.

In the step of injecting a carbon source gas into the reactor and carrying out heating to synthesize carbon nanotubes, the carried catalyst for manufacturing entangled type carbon nanotubes, which has been charged into the reactor, flows to synthesize carbon nanotubes including entangled type carbon nanotubes.

Since the catalytic component of the catalyst for manufacturing entangled type carbon nanotube is contained in the internal pores, almost all the carbon nanotubes can grow in the form of the entangled type carbon nanotubes as the carbon nanotubes are synthesized in the internal pores of the catalyst for manufacturing entangled type carbon nanotubes.

On the other hand, in this step, carbon nanotube particles synthesized in advance may be charged together with a catalyst to ensure the temperature inside the reactor. In a case where carbon nanotube particles are charged together with a catalyst, a small amount of the catalyst is required to ensure a sufficient temperature inside the reactor, which provides the advantage of enabling a uniform reaction.

On the other hand, in the manufacturing method according to the present invention, the carbon source gas is a carbon-containing gas that can be decomposed in a high temperature state to form carbon nanotubes. As a specific example, various carbon-containing compounds such as an aliphatic alkane, an aliphatic alkene, an aliphatic alkyne, and an aromatic compound may be used, and more specifically, it is possible to use compounds such as methane, ethane, ethylene, acetylene, ethanol, methanol, acetone, carbon monoxide, propane, butane, benzene, cyclohexane, propylene, butene, isobutene, toluene, xylene, cumene, ethylbenzene, naphthalene, phenanthrene, anthracene, acetylene, formaldehyde, and acetaldehyde.

In the manufacturing method according to the present invention, a flowing gas can be injected together with a carbon source gas into a chemical vapor deposition reactor. The flowing gas is for imparting fluidity to the carbon nanotubes synthesized in the fluidized bed reactor and the catalyst particles, and a gas having high thermal stability without reacting with the carbon source gas or the carbon nanotubes may be used. For example, nitrogen gas or inert gas can be used as the flowing gas.

In addition, in the manufacturing method according to the present invention, a reducing gas can be injected together with the carbon source gas and the flowing gas. The reducing gas can further promote the decomposition of the carbon source gas, and for example, hydrogen gas can be used as the reducing gas.

In the manufacturing method according to the present invention, the heating in the synthesis step may be such that the temperature inside the reactor is 600 °C to 800 °C. In a case where the temperature in the reactor is within the range described above, the carbon source gas is easily decomposed, and thus the carbon nanotubes may be easily synthesized. In a case where the temperature is not in the range described above, there may be a problem in that the carbon nanotubes are not manufactured favorably, and in a case where the temperature exceeds the range described above, there may be a problem in that not only it is expensive to carry out heating, but the catalyst particles themselves decompose.

In the carbon nanotubes manufactured by the manufacturing method for entangled type carbon nanotubes provided by the present invention, the entangled type carbon nanotubes to be included may be 99.8% by weight or more, and specifically, may be 99.8% to 100% by weight, 99.8% to 99.95 by weight, 99.9% to 100% by weight, 99.9% to 99.95 by weight, or 99.95% to 100% by weight.

In addition, in the carbon nanotubes manufactured by the manufacturing method for entangled type carbon nanotubes provided by the present invention, the entangled type carbon nanotubes may be included in a rate of 99.8% or more, and specifically, may be 99.8% to 100%, 99.8% to 99.95, 99.9% to 100%, 99.9% to 99.95%, or 99.95% to 100% based on the total number of carbon nanotubes.

For the rate of the entangled type carbon nanotubes, a value determined by obtaining an SEM image of the manufactured carbon nanotubes, determining the rate of the bundle type carbon nanotubes therefrom, and subtracting the rate of the bundle type carbon nanotubes with respect to the total number of carbon nanotubes can be adopted as the rate of the entangled type carbon nanotubes.

In addition, the entangled type carbon nanotube manufactured by the manufacturing method for entangled type carbon nanotubes according to the present invention may exhibit a bulk density of 70 kg/m³ or more, specifically a bulk density of 80 kg/m³ or more or 90 kg/m³ or more, and more specifically a bulk density of 95 kg/m³ or more. It may exhibit a bulk density of 150 kg/m³ or less, specifically 120 kg/m³ or less, and more specifically 110 kg/m³ or less.

In addition, the entangled type carbon nanotube manufactured by the manufacturing method for entangled type carbon nanotubes according to the present invention may exhibit a pore volume of 1.00 to 3.00 cm³/g, specifically a pore volume of 1.35 to 2.5 cm³/g or 1.40 to 2.0 cm³/g, and more specifically a pore volume of 1.50 to 2.0 cm³/g.

In addition, the entangled type carbon nanotube manufactured by the manufacturing method for entangled type carbon nanotubes according to the present invention may exhibit an average pore size (D₅₀) of 30 to 80 nm, specifically an average pore size (D₅₀) of 35 to 70 nm, and more specifically an average pore size (D₅₀) of 40 to 60 nm.

In addition, the entangled type carbon nanotube manufactured by the manufacturing method for entangled type carbon nanotubes according to the present invention may satisfy a pore retention rate of 0.98 to 1.02 after being crushed by carrying out a ball milling process. The pore retention rate may be specifically 0.985 or more, 0.99 or more, or 1.00 or more, and it may be 1.02 or less, 1.015 or less, 1.01 or less, or 1.005 or less.

Here, the pore retention rate can be represented by the following expression. Pore retention rate = (pore volume of carbon nanotube after ball milling process/pore volume of carbon nanotube before ball milling process) X 100

The ball milling process conditions for specifying the pore retention rate may be for carrying out the ball milling process using zirconia balls having a ball diameter of 3 mm under conditions of a ball weight of 1 kg, a rotational speed of 230 rpm, a ball milling time of 5 minutes, and a CNT charging amount of 60 g.

Such entangled type carbon nanotubes manufactured by the manufacturing method for entangled type carbon nanotubes according to the present invention may include entangled type carbon nanotubes with high purity. As a result, the method of manufacturing entangled type carbon nanotubes according to the present invention can be usefully used for manufacturing entangled type carbon nanotubes that exhibit high mechanical strength.

Hereinafter, the present invention will be described in more detail with reference to Examples and Experimental Examples to illustrate the present invention. However, the present invention is not limited by these Examples and Experimental Examples. Examples according to the present invention may be modified in various other forms, and the scope of the present invention should not be construed to be limited to Examples described below. Examples of the present invention are provided to more fully describe the present invention to those with average skill in the art.

### Example 1

A spherical alumina support having a sphericity of 0.99 to 1, a specific surface area of 150 m²/g, a pore volume of 0.9 cm³/g, and a D₅₀ of 50 um was prepared. In addition, a cobalt precursor Co(NO₃)₂·6H₂O and a vanadium precursor NH₄VO₃ were mixed and dissolved in water at a molar ratio of 10:1.3 to produce a catalyst carrying solution. In the catalyst carrying solution, the concentration of cobalt was 12.3% by weight, and the concentration of vanadium was 0.89% by weight. The previously prepared alumina support was charged to the produced catalyst carrying solution, and mixing was carried out so that the cobalt content in the catalyst was 19% by weight and the vanadium content was 2% by weight. After the mixing was completed, the mixture was dried under the conditions of normal pressure and 120 °C and then fired under the condition of 700 °C and in the air for 2 hours and 30 minutes to obtain a carried catalyst for manufacturing carbon nanotubes.

### Example 2

Operations were carried out in the same manner as in Example 1, on the condition that the concentration of cobalt in the catalyst carrying solution was made to be 8.4% by weight, whereby the cobalt content in the catalyst was made to be 13% by weight.

### Example 3

Operations were carried out in the same manner as in Example 1, on the condition that the concentration of cobalt in the catalyst carrying solution was made to be 10.3% by weight, whereby the cobalt content in the catalyst was made to be 16% by weight.

### Example 4

Operations were carried out in the same manner as in Example 1, on the condition that the concentration of cobalt in the catalyst carrying solution was made to be 14.2% by weight, whereby the cobalt content in the catalyst was made to be 22% by weight.

### Comparative Example 1

Operations were carried out in the same manner as in Example 1, on the condition that the concentration of cobalt in the catalyst carrying solution was made to be 19.4% by weight, whereby the cobalt content in the catalyst was made to be 30% by weight.

### Comparative Example 2

Operations were carried out in the same manner as in Example 1, on the condition that the concentration of cobalt in the catalyst carrying solution was made to be 6.5% by weight, whereby the cobalt content in the catalyst was made to be 10% by weight.

### Comparative Example 3

Operations were carried out in the same manner as in Example 1, on the condition that a spherical alumina support (SCCa-5/200, manufactured by Sasol Limited) having a sphericity of 0.99 to 1 and a pore volume of 0.5 m³/g or less was used.

### Comparative Example 4

Operations were carried out in the same manner as in Example 1, on the condition that a spherical gamma alumina support (SCCa-5/200, manufactured by Sasol Limited) having a sphericity of 0.99 to 1 and a pore volume of 0.5 cm³/g or less was used, and the concentration of cobalt in the catalyst carrying solution was made to be 8.4% by weight, whereby the cobalt content in the catalyst was made to be 13% by weight.

### Comparative Example 5

Operations were carried out in the same manner as in Example 1, on the condition that a spherical gamma alumina support having a sphericity of 0.99 to 1 and a pore volume of 0.15 cm³/g or less was manufactured and used.

### Comparative Example 6

Operations were carried out in the same manner as in Example 1, on the condition that a spherical gamma alumina support (TH-200/110, manufactured by Sasol Limited) having a sphericity of 0.99 to 1 and a pore volume of 1.2 cm³/g or more was used.

### Comparative Example 7

Operations were carried out in the same manner as in Example 1, on the condition that a plate-shaped gamma alumina support having a pore volume of 0.2 cm³/g or more, a specific surface area of 150 m²/g, and a sphericity of 0.5 to 0.6 was used as a non-spherical alumina support.

### Examples 1a to 4a and Comparative Examples 1a to 7a

### Manufacturing of carbon nanotubes

Each of the carried catalysts for manufacturing carbon nanotubes, which had been manufactured in Examples 1 to 4 and Comparative Examples 1 to 7 was charged into a fluidized bed reactor, and carbon nanotubes were synthesized in an ethylene atmosphere at 750 °C.

### Experimental Example 1: SEM

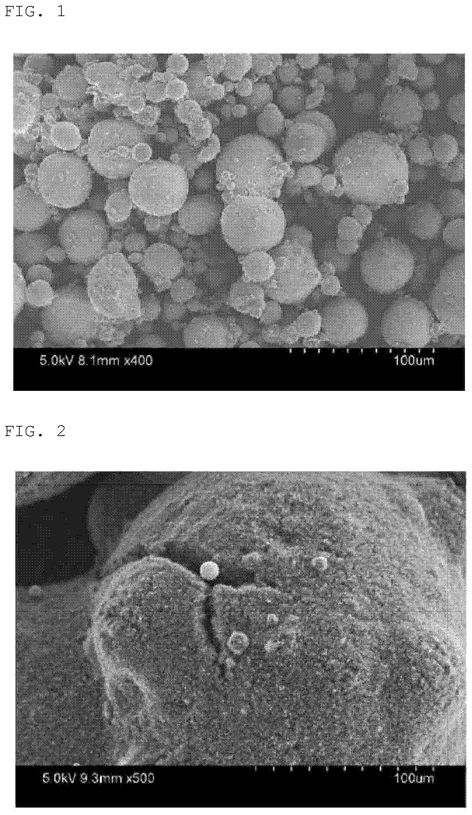

The carbon nanotubes manufactured respectively in Example 1a and Comparative Examples 3a to 5a and 7a were subjected to imaging with a scanning electron microscope (SEM) to obtain photographic images, which are shown in FIGS. 2 to 6.

In addition, the SEM photographic images were observed to check the growth rates of the entangled type carbon nanotubes and the bundle type carbon nanotubes, which are shown in Table 1 below.

**[Table 1]**

| | Example 1a | Comparativ e Example 3a | Comparativ e Example 4a | Comparativ e Example 5a | Comparativ e Example 7a |
|---|---|---|---|---|---|
| Catalyst | Example 1 | Comparativ e Example 3 | Comparativ e Example 4 | Comparativ e Example 5 | Comparativ e Example 7 |
| Ratio (%) of bundle type CNT observed in SEM photographic image | 0 | 0.8 | 0.4 | 0.99 | 0.99 |

From FIGS. 2 to 6, it is possible to observe the manufactured carbon nanotubes, it is possible to confirm the entangled type carbon nanotubes and the bundle type carbon nanotubes, and it is possible to check the growth rates of the entangled type carbon nanotubes and the bundle type carbon nanotubes.

The carbon nanotubes manufactured in Example 1a of FIG. 2 were obtained by using the carried catalyst for manufacturing carbon nanotubes in Example 1. In the catalyst of Example 1, an appropriate amount of Co was carried on a spherical gamma alumina support having a sufficient pore volume, whereby mostly, entangled type carbon nanotubes were manufactured by using this Co as a catalyst, which made it difficult to identify bundle type carbon nanotubes in the SEM photographic image.

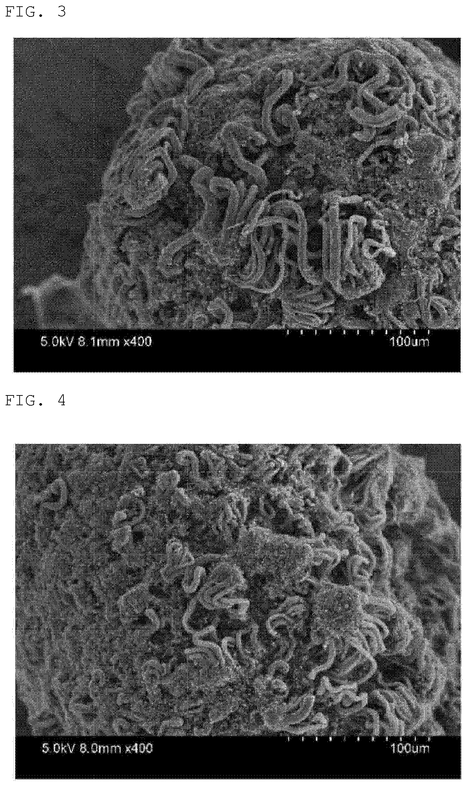

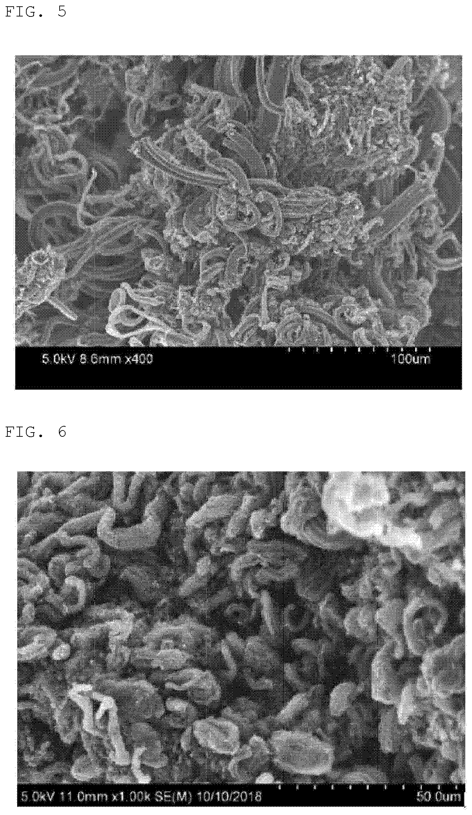

On the other hand, the carbon nanotubes manufactured in Comparative Examples 3a and 4a of FIGS. 3 and 4 were obtained by using the carried catalysts for manufacturing carbon nanotubes in Comparative Examples 3 and 4, respectively. It could be confirmed in the SEM photographic images that in the catalysts of Comparative Examples 3 and 4, the pore volume of the spherical gamma alumina support is insufficient, and thus the rate of the bundle type carbon nanotubes is high in the manufactured carbon nanotubes. This is likely due to Co that has not been carried in the pores of the spherical gamma alumina support. In particular, with reference to FIG. 5, which is an SEM photographic image of the carbon nanotubes manufactured in Comparative Example 5a, it can be confirmed that most of the carbon nanotubes are bundle type carbon nanotubes. This is likely due to the fact that a spherical gamma alumina support having the smallest pore volume has been used in the carried catalyst for manufacturing carbon nanotubes in Comparative Example 5, which causes the rate of Co not carried in the pores to be highest. On the other hand, the fact that the rate of Co carried in the pores of the spherical gamma alumina support affects the rate of entangled type carbon nanotubes can be confirmed by the comparison between the catalysts for manufacturing carbon nanotubes in Comparative Examples 3a and 4a, which differ only in the amount of Co used on the condition that the same spherical gamma alumina support is used. In addition, it can be confirmed from Table 1 above and FIG. 6 that in Comparative Example 7a in which the catalyst of Comparative Example 7 is used, where the catalyst includes a gamma alumina support having a sphericity of 0.5 to 0.6 and having plate-shaped particles, a rate of bundle type carbon nanotubes generated is significantly high. This is likely due to the fact that the gamma alumina support particles do not have a spherical shape.

### Experimental Example 2: Evaluation of physical properties

The carbon nanotubes manufactured respectively in Examples 1a to 4a and Comparative Examples 1a to 5a and 7a were subject to measurements of the pore volume, the average pore size, the specific surface area, and the bulk density, the ball milling process was carried out under the following conditions to carry out the crushing process, and then the pore retention rate after the crushing process was measured.

The measurement results are shown in Table 2 below.
(1) Structure of secondary shape: An image was obtained with a scanning electron microscope (SEM) and used to check the kind of the structure of the secondary shape of the carbon nanotubes.
(2) Pore volume: Measurement was carried out in accordance with ASTM D4641.
(3) Average pore size: Using BELSORP-mini II (product name, manufacturer: BEL Japan Inc.), the amounts of N₂ adsorption and desorption were measured while changing the relative pressure (P/P0) from 0.01 to 0.99 at liquid nitrogen temperature (-196 °C). Then, using the BJH numerical expression, the pore size at the time when a value obtained by subjecting 'pressure-dependent pore volume' to differentiation by 'log value of pressure-dependent pore size (dp) ' was maximum was measured as the average pore size based on the desorption.
(4) Specific surface area: A calculation was carried out from the amount of nitrogen gas adsorption at liquid nitrogen temperature (77 K) by using BELSORP-mini II manufactured by BEL Japan Inc.
(5) Bulk density: Carbon nanotubes were charged in a manner of free fall up to the container line into a cylinder-form container having a volume of 0.05 m3, the weight thereof was measured, and the measured weight was divided by the volume of the container, 0.05 m3, to calculate the bulk density.
(6) Pore retention rate:
Pore retention rate = (pore volume of carbon nanotubes after crushing process)/(pore volume of carbon nanotubes before crushing process)

**[Table 2]**

| | Structure of secondary shape | Pore volume (cm³/g) | Average pore size (nm) | Specific surface area (m²/g) | Bulk density (kg/m³) | Pore retention rate |
|---|---|---|---|---|---|---|
| Example 1a | Entangled type | 1.89 | 50.2 | 197.1 | 101.2 | 1.005 |
| Example 2a | Entangled type | 1.65 | 42.5 | 162.7 | 99.1 | 0.994 |
| Example 3a | Entangled type | 1.75 | 45.3 | 196.6 | 103.2 | 1.005 |
| Example 4a | Entangled type | 1.85 | 48.0 | 189.0 | 109.3 | 1.008 |
| Comparat ive Example 1a | Entangled type + bundle type | 1.79 | 48.7 | 186.3 | 108.3 | 0.938 |
| Comparat ive Example 2a | Entangled type | 1.25 | 29.3 | 202.6 | 91.8 | 0. 944 |
| Comparat ive Example 3a | Entangled type + bundle type | 2.02 | 50.5 | 198.9 | 120.9 | 0.886 |
| Comparat ive Example 4a | Entangled type + bundle type | 1.79 | 45.0 | 192.1 | 118.0 | 0.871 |
| Comparat ive Example 5a | Bundle type | 1.99 | 50.2 | 193.8 | 69.8 | 0.824 |
| Comparat ive Example 6a | The carried catalyst did not flow in the fluidized bed reactor and thus no carbon nanotubes could be synthesized. | | | | | |
| Comparat ive Example 7a | Bundle type | 0.64 | 16.4 | 197.6 | 40.5 | 0.836 |

In a case of Comparative Example 6a, which is an experiment of the carbon nanotube synthesis using the carried catalyst of Comparative Example 6, the carried catalyst did not flow properly during the reaction in the fluidized bed reactor and thus no carbon nanotubes were synthesized. The carried catalyst of Comparative Example 6 has a hard solidified form. This is analyzed to be because Co has been subjected to mutual aggregation in the three-dimensional space inside the pores due to the large pore volume of the spherical gamma alumina support and thus solidified during the firing process.

As a result of observing the carbon nanotubes synthesized in Examples 1a to 4a and Comparative Examples 1a to 5a and 7a with a scanning electron microscope (SEM), it could be confirmed that in the carbon nanotubes manufactured in Examples 1a to 4a and Comparative Example 2a, the shape of the secondary structure belongs to the entangled type carbon nanotube, and it could be confirmed that the carbon nanotubes manufactured in Comparative Examples 1a, 3a, and 4a have a form in which entangled type carbon nanotubes are mixed with a part of bundle type carbon nanotubes. On the other hand, it could be confirmed that most of the carbon nanotubes manufactured in Comparative Example 5a have a form of bundle type carbon nanotubes.

It can be confirmed that the carbon nanotubes manufactured in Examples 1a to 4a have excellent mechanical rigidity have excellent mechanical rigidity since the shape of the secondary structure belongs to the entangled type carbon nanotube, and the change in pore volume is small after the crushing treatment by the ball milling process.

On the other hand, in the carbon nanotubes manufactured in Comparative Examples 1a, 3a, and 4a, it could be confirmed that the shape of the secondary structure is a form in which entangled type carbon nanotubes are mixed with bundle type carbon nanotubes, and due to the relatively low mechanical rigidity thereof, the pore volume was reduced relatively significantly by crushing treatment by the ball milling process. In addition, it could be confirmed that in the carbon nanotubes manufactured in Comparative Example 5a, in which the shape of the secondary structure of most of the carbon nanotubes belongs to the bundle type carbon nanotubes, due to the low mechanical rigidity of the bundle type carbon nanotubes, the pore volume was significantly reduced after the crushing treatment by the ball milling process. In particular, in a case of Comparative Example 1a, it can be confirmed that the content of Co carried on the support is excessive, exceeding 25% by weight, and thus the carbon nanotubes that are finally manufactured contain a large number of bundle type carbon nanotubes.

On the other hand, it could be confirmed that although in the carbon nanotubes manufactured in Comparative Example 2a, the shape of the secondary structure belongs to the entangled type carbon nanotube, the carried catalyst used has a low content of Co as a main catalyst, as compared with the spherical gamma alumina support, and thus the yield of the manufactured carbon nanotubes is significantly reduced, and the bulk density is also reduced. As a result, it could be confirmed that the mechanical rigidity of the manufactured carbon nanotubes decreases and the pore retention rate decreases after the crushing process even in the case of the entangled type carbon nanotubes, and thus the manufactured carbon nanotubes have a mechanical rigidity that is not suitable for being used as a support.

In addition, it can be confirmed that the carbon nanotubes manufactured in Comparative Example 7a have a significantly high content of bundle type carbon nanotubes due to being manufactured using the catalyst of Comparative Example 7, which includes a gamma alumina support having plate-shaped particles. In addition, it can be confirmed that as a result, in the carbon nanotubes manufactured in Comparative Example 7a, the bulk density is also significantly low, the mechanical rigidity is reduced, and thus the pore retention rate after the crushing process is also quite low.

In addition, from the checking and the evaluation with the SEM photographic images in Experimental Example 1, together with the evaluation of physical properties in Experimental Example 2, it could be confirmed that the entangled type carbon nanotubes of Examples 1a to 4a, which are manufactured respectively using the catalysts for manufacturing carbon nanotubes in Examples 1 to 4 exhibit significantly high mechanical rigidity, and this made it possible to confirm that the catalysts for manufacturing carbon nanotubes in Examples 1 to 4, in which the pore volume of the spherical gamma alumina support and the content of Co satisfy an appropriate range, are effective as catalysts for manufacturing entangled type carbon nanotubes.

## Claims

1. A carried catalyst for manufacturing entangled type carbon nanotubes, the carried catalyst comprising:
a spherical gamma alumina support; and
Co and V which are carried on the gamma alumina support,
wherein the gamma alumina support has a pore volume of 0.7 to 1.1 cm³/g and a specific surface area of 80 to 200 m²/g, and
a content of Co carried on the gamma alumina support is 12 to 25% by weight.

2. The carried catalyst according to claim 1,
wherein Co and V are carried in internal pores of the gamma alumina support.

3. The carried catalyst according to claim 1, wherein the gamma alumina support is a secondary particle formed by aggregating primary particles.

4. The carried catalyst according to claim 1, wherein the pore volume of the gamma alumina support is 0.9 to 1.1 cm³/g.

5. The carried catalyst according to claim 1, wherein the specific surface area of the gamma alumina support is 80 to 170 m²/g.

6. The carried catalyst according to claim 1, wherein a sphericity of the gamma alumina support is 0.90 to 1.

7. The carried catalyst according to claim 1, wherein the content of Co carried on the gamma alumina support is 13 to 21% by weight.

8. The carried catalyst according to claim 1, wherein a content of the V carried on the gamma alumina support is 1 to 10% by weight.

9. A manufacturing method for entangled type carbon nanotubes, comprising:
a step of charging the carried catalyst for manufacturing entangled type carbon nanotubes according to Claim 1 into a reactor; and
a step of injecting a carbon source gas into the reactor and carrying out heating to synthesize carbon nanotubes,
wherein the carbon nanotubes include entangled type carbon nanotubes.

10. The manufacturing method according to claim 9, wherein the reactor is a fluidized bed reactor.

11. The manufacturing method according to claim 9, wherein the carbon nanotubes include 99.8% by weight or more of the entangled type carbon nanotubes.

12. The manufacturing method according to claim 9, wherein the entangled type carbon nanotubes have a pore retention rate of 0.98 to 1.02 after being crushed by being subjected to a ball milling process;
wherein the ball milling process is carried out using zirconia balls having a ball diameter of 3 mm under conditions of a ball weight of 1 kg, a rotational speed of 230 rpm, a ball milling time of 5 minutes, and a CNT charging amount of 60 g, and
a pore retention rate is represented by the following expression,
pore retention rate = (pore volume of carbon nanotube after ball milling process/pore volume of carbon nanotube before ball milling process) X 100.
